Europäisches Patentamt

European Patent Office

Office européen des brevets

(11) Numéro de publication: **0 399 875**
**A1**

## DEMANDE DE BREVET EUROPEEN

(21) Numéro de dépôt: **90401302.6**

(22) Date de dépôt: **16.05.90**

(51) Int. Cl.5: **G02C 5/22, G02C 5/00**

(30) Priorité: **26.05.89 FR 8906911**

(43) Date de publication de la demande:
**28.11.90 Bulletin 90/48**

(84) Etats contractants désignés:
**CH DE GB IT LI**

(71) Demandeur: **ESSILOR INTERNATIONAL Cie Générale d'Optique**
**1 Rue Thomas-Edison Echat 902**
**F-94000 Creteil(FR)**

(72) Inventeur: **Hubin, Claude**
**rue Côte de Bar**
**F-55300 Saint-Michel(FR)**

(74) Mandataire: **CABINET BONNET-THIRION G. FOLDES**
**95 Boulevard Beaumarchais**
**F-75003 Paris(FR)**

(54) **Monture de lunettes à branches articulées par charnières élastiques.**

(57) Monture de lunettes à charnières comprenant un charnon mâle muni d'une came à encoche.

Selon l'invention, ladite came forme une seule pièce avec un premier élément (13) métallique constituant par exemple l'une des branches et l'ensemble est constitué d'un alliage durcissable par traitement thermique, par exemple un alliage cuivreux, au moins la came étant durcie par un tel traitement.

L'invention permet d'éviter tout phénomène de corrosion entre la came et ledite premier élément.

EP 0 399 875 A1

Xerox Copy Centre

## Monture de lunettes à branches articulées par charnières élastiques

L'invention se rapporte à une monture de lunettes à branches articulées par charnières élastiques et concerne plus particulièrement un perfectionnement permettant d'augmenter la résistance mécanique et d'éviter la rupture desdites charnières élastiques.

Une monture de lunettes du genre connu indiqué ci-dessus comporte, pour définir chaque charnière d'articulation d'une branche, un charnon mâle dont le contour est conformé en came à encoches, assemblé généralement par soudo-brasage à un premier élément métallique et un charnon femelle solidaire d'un second élément, agencé à proximité d'un mécanisme blocage élastique, généralement un mécanisme à bille et ressort. Ledit premier élément constitue généralement la partie principale d'une branche de la monture tandis que le second élément incluant le charnon femelle et le mécanisme de blocage comporte les "cercles" de montage des verres. La bille du mécanisme de blocage est sollicitée par le ressort vers la came, de façon à pouvoir s'engager dans les encoches et définir autant de positions stables de la branche de lunettes correspondante.

Jusqu'à ce jour, ledit charnon mâle formant la came était le plus souvent en acier inoxydable, de préférence durci par traitement thermique et assemblé par soudo-brasage audit premier élément. Cette conception était dictée par la nécessité de disposer d'une came de grande dureté, ayant une bonne résistance à l'usure.

On a constaté qu'à l'usage, des phénomènes de corrosion se produisaient au niveau du charnon, entraînant fréquemment la rupture de la came. Une étude plus approfondie des causes de la vulnérabilité de la came (ayant débouché sur l'invention décrite ci-dessous) permet d'attribuer cette corrosion à de probables phénomènes de pile électrique entre les deux pièces soudées.

L'invention permet de résoudre ce problème tout en simplifiant la construction de l'ensemble constitué par le charnon mâle et ledit premier élément.

Dans cet esprit, l'invention concerne donc essentiellement une monture de lunettes à branches articulées par charnières élastiques, chaque charnière comportant un charnon mâle muni d'une came à encoches, solidaire d'un premier élément, métallique et un charnon femelle associé à un mécanisme de blocage élastique, solidaire d'un second élément, caractérisée en ce que ladite came et ledit premier élément forment un ensemble d'une seule pièce en alliage durcissable par traitement thermique, et en ce qu'au moins la came est durcie par un tel traitement thermique.

Cet alliage est de préférence un alliage cuivreux comme par exemple un alliage de cuivre et de beryllium.

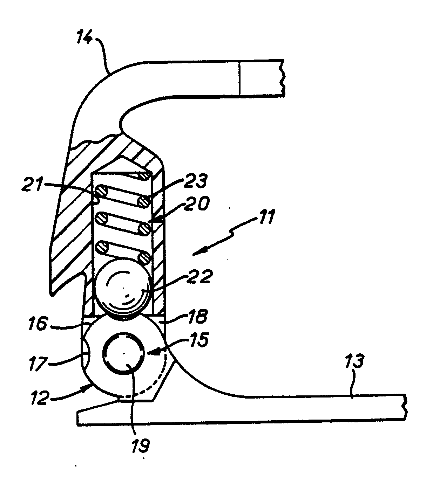

L'invention sera mieux comprise et d'autres avantages de celle-ci apparaîtront plus clairement à la lumière de la description qui va suivre d'un mode de réalisation conforme à son principe, donnée uniquement à titre d'exemple et faite en référence au dessin annexé dans lequel:

- la figure unique est une vue partielle d'une monture de lunettes, représentée partiellement en coupe, montrant plus particulièrement l'une des charnières, conforme à l'invention.

On a représenté partiellement une monture de lunettes 11 et plus particulièrement l'une de ses charnières 12 reliant un premier élément 13, métallique, constituant la partie principale de l'une des branches et un second élément 14 formant plus particulièrement ici des "cercles" supportant les verres de lunettes. La charnière est ici une charnière élastique conforme à la définition qui précède. Elle comporte donc un charnon mâle 15 dont le contour définit une came 16 à encoches 17 et un charnon femelle 18 formant chape. Classiquement, les deux charnons comportent des trous alignés au montage et sont articulés l'un à l'autre par un tourillon 19 constitué par une simple vis. Le charnon mâle 15 est solidaire du premier élément 13, c'est-à-dire d'une branche de la monture. Le charnon femelle 18 fait partie dudit second élément 14. Un mécanisme de blocage élastique 20 est également agencé dans un trou borgne 21 de ce second élément, au voisinage immédiat dudit charnon femelle. Ce mécanisme de blocage est ici simplement constitué par une bille 22 et un ressort 23. Le ressort prend appui contre le fond du trou 21 et sollicite la bille vers la came 16 de façon que celle-ci puisse s'engager dans l'une des encoches 17 pour définir une position stable prédéterminée de la branche par rapport au reste de la monture.

Selon une caractéristique importante de l'invention, ladite came 16 et ledit premier élément 13 forment un ensemble d'une seule pièce, en un alliage durcissable par traitement thermique. Il s'agit ici d'un alliage cuivreux. Le traitement thermique appliqué à la came permet d'en augmenter la résistance mécanique et sa dureté.

A titre d'exemple, pour un tel alliage de cuivre et de beryllium, un traitement thermique de 400° pendant une heure trente permet d'atteindre une dureté de 300 Vickers. La dureté peut être portée à 400 Vickers par un traitement thermique de 400°C pendant une heure trente et de 450°C pendant trois heures. L'alliage de cuivre et de beryllium en question pourra avoir la constitution suivante:

Cuivre: 97%, Beryllium 1,9%, avec des traces de Nickel et de Cobalt.

D'autres alliages peuvent convenir notamment des alliages de cuivre, nickel et étain. On pourra retenir de tels alliages avec les compositions suivantes:
- Cuivre: 85%, Nickel: 9%, Etain: 6%
- Cuivre: 77%, Nickel: 15%, Etain: 8%.

L'alliage pourra aussi être à base de cuivre, de nickel et de silicium, un tel alliage renfermant par exemple environ 2,5% de Nickel et 0,6% de Silicium. Un autre alliage convenable pourra contenir environ 60% de Cuivre, 20% de Manganèse et 20% de Nickel. Encore un autre alliage possible à base de cuivre renfermera environ 24,5% de Zinc, 25% de Nickel et 15% de Manganèse. Ces exemples ne sont pas limitatifs et le traitement thermique peut être adapté en fonction de l'alliage choisi.

**Revendications**

1- Monture de lunettes à branches articulées par charnières élastiques, chaque charnière comportant un charnon mâle (15) muni d'une came (16) à encoches (17), solidaire d'un premier élément (13) métallique et un charnon femelle (18) associé à un mécanisme de blocage élastique (20), solidaire d'un second élément, caractérisée en ce que ladite came (16) et ledit premier élément (13) forment un ensemble d'une seule pièce en un alliage durcissable par traitement thermique et en ce qu'au moins la came est durcie par un tel traitement thermique.

2- Monture de lunettes selon la revendication 1, caractérisée en ce que ledit alliage est un alliage cuivreux.

3- Monture de lunettes selon la revendication 2, caractérisée en ce que ledit alliage cuivreux est un alliage de cuivre et de beryllium.

4- Monture de lunettes selon la revendication 2, caractérisée en ce que ledit alliage cuivreux est un alliage de cuivre, de nickel et d'étain.

5- Monture de lunettes selon la revendication 2, caractérisée en ce que ledit alliage cuivreux est un alliage de cuivre, de nickel et de silicium.

6- Monture de lunettes selon la revendication 2, caractérisée en ce que ledit alliage cuivreux est un alliage de cuivre, de nickel et de manganèse.

7- Monture de lunettes selon la revendication 2, caractérisée en ce que ledit alliage cuivreux est un alliage de cuivre, de zinc, de nickel et de manganèse.

8- Monture de lunettes selon l'une des revendications précédentes, caractérisée en ce que ledit premier élément (13) forme au moins en partie une branche précitée.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 266 307  (LN INDUSTRIES) <br> * Abrégé * <br> --- | 1,8 | G 02 C   5/22 <br> G 02 C   5/00 |
| Y | EP-A-0 144 564  (DEGUSSA AG) <br> * Revendications * <br> --- | 1-3,5-7 | |
| A | FR-A-2 504 283  (NIPPON GAKKI SEIZO) <br> * Revendications * <br> --- | 1-5 | |
| A | EP-A-0 119 501  (VACUUMSCHMELZE) <br> * Revendications * <br> --- | 1-3,6-7 | |
| A | EP-A-0 187 937  (DEGUSSA AG) <br> * Revendications * <br> --- | 1-4 | |
| A | FR-A-2 086 935  (INTERNATIONAL NICKEL LTD) <br> * Revendications * <br> ----- | 6,7 | |

DOMAINES TECHNIQUES
RECHERCHES (Int. Cl.5)

G 02 C   5/22
G 02 C   5/00

Le présent rapport a été établi pour toutes les revendications

| Lieu de la recherche | Date d'achèvement de la recherche | Examinateur |
|---|---|---|
| LA HAYE | 17-08-1990 | CALLEWAERT-HAEZEBROUCK H |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

...............................................................
& : membre de la même famille, document correspondant

EPO FORM 1503 03.82 (P0402)